# DEMANDE DE BREVET EUROPEEN

(11) **EP 4 711 744 A1**
(43) Date de publication de la demande: **18.03.2026**
(21) Numéro de dépôt: 24306525.7
(22) Date de dépôt: 16.09.2024
(51) Int. Cl.: G01N 21/19, G01N 21/21, G06F 21/32, H04L 9/32

(54) **SYSTEME D'AUTHENTIFICATION PAR ANALYSE DES SPECTRES DE DICHROISME CIRCULAIRE DE MOLECULES BIOLOGIQUES OU ORGANIQUES**

(71) Demandeur: Université de Lorraine, 54000 Nancy (FR); Centre National de la Recherche Scientifique, 75016 Paris (FR); Institut National de Recherche en Informatique et en Automatique, 78150 Rocquencourt (FR); Institut National de la Santé et de la Recherche Médicale, 75013 Paris (FR)
(72) Inventeur: QUINTERNET, Marc, 54230 Chaligny (FR); KRIZNIK, Alexandre, 54600 Villers-les-Nancy (FR); BECK, Frédéric, 54600 Villers-les-Nancy (FR)
(74) Mandataire: Novagraaf Technologies

(57) **Abrégé**

L'invention concerne un nouveau système d'authentification basé sur l'analyse des spectres de dichroïsme circulaire de molécules biologiques ou organiques qui présentent un taux de diversité extrêmement élevé.

## Description

### Domaine technique de l'invention

L'invention concerne un nouveau système d'authentification basé sur l'analyse des spectres de dichroïsme circulaire de molécules biologiques ou organiques qui présentent un taux de diversité extrêmement élevé.

L'invention trouve des applications possibles dans les domaines liés à la sécurisation de données informatiques, à la sécurisation d'accès à des sites sensibles, protégés ou secret-défense, etc....

Dans la description ci-dessous, les références entre crochets ([ ]) renvoient à la liste de références à la fin du texte.

### Etat de la technique

La transformation numérique du monde actuel a rendu plus que nécessaire la sécurisation des données informatiques qui sont stockées, mises à disposition ou échangées à chaque instant, partout sur la planète. En effet, de nombreuses données peuvent apparaître comme sensibles. Il peut s'agir de données personnelles (comme un simple numéro de téléphone ou encore un dossier médical confidentiel) mais aussi de données renfermant des enjeux bancaires, politiques, géostratégiques ou militaires. Logiquement ces données sensibles deviennent donc les proies potentielles de pirates informatiques.

La cybersécurité représente un ensemble de moyens, d'outils, de méthodes ou encore de lois visant à protéger des données et systèmes informatiques. Les antivirus de nos ordinateurs sont un exemple concret d'outils permettant la sécurisation au quotidien de notre terminal d'accès à internet.

Toutefois, l'authentification, c'est-à-dire le processus permettant à un système informatique de s'assurer de l'identité d'un utilisateur et de valider ses droits d'accès, demeure une étape initiale, et bien souvent cruciale, dans la mécanique générale de cybersécurité. Il existe divers moyens d'authentification. Le plus simple à mettre en place est la saisie d'un identifiant et d'un mot de passe. Cependant, cette méthode présente des failles. Par exemple, elle peut être contournée par des attaques de type brute-force qui consistent à générer toutes les combinaisons possibles d'un mot de passe.

Très régulièrement, il est fait état de fuites de données ou de bases de mots de passe dans la presse. Ces fuites alimentent par exemple les attaques de type hameçonnage (ou « phishing » en anglais). Ces identifiants et mots de passe sont également régulièrement ciblés par des logiciels malveillants capables d'infecter un ou plusieurs postes sur un réseau informatique, compromettant ainsi la sécurité de tout le système d'information.

Afin de protéger les données et services les plus critiques, et de rendre la tâche plus compliquée pour un éventuel attaquant, des mécanismes imposant plusieurs facteurs d'authentification ont été introduits. On parle alors d'authentification forte.

La procédure d'authentification repose sur l'utilisation d'au moins deux facteurs de nature distincte, par exemple :
- Facteur mémoriel ou « que l'on connaît » : un mot de passe, un code confidentiel, une phrase secrète, etc...
- Facteur matériel ou « que l'on possède », soit un jeton physique d'authentification : une carte à puce ou magnétique, une clé USB, etc...
- Facteur physique ou « que l'on est », la biométrie : une empreinte digitale / rétinienne/ veineuse, reconnaissance faciale, etc...
- Facteur réactionnel ou comportemental : la manière de taper une phrase secrète, une signature manuscrite, la voix, etc...

Cette procédure permet d'authentifier et d'identifier (au travers d'un tiers de confiance) une personne physique ou morale, mais aussi des objets ou applications.

Les avancées technologiques ont permis de généraliser la mise en place de moyens d'authentification biométriques. Malgré leur facilité d'utilisation, les paramètres biométriques présentent toutefois des inconvénients car ils peuvent varier avec l'âge et l'état de santé par exemple. De plus, l'utilisation de la biométrie peut également apparaître pour certain comme un obstacle au droit à disposer de son corps.

Dans ce contexte, le développement de solutions innovantes permettant une authentification fiable et la sécurisation de données critiques demeure essentiel.

### Description de l'invention

### Discipline à la base de l'invention :

La biophysique est une discipline à l'interface entre la biologie et la physique. Elle consiste à étudier *in vitro* les propriétés physiques de molécules biologiques. Elle permet de mesurer l'impact des conditions environnementales (comme la température, la pression, la concentration, la force ionique, etc.) sur la structure tri-dimensionnelle, la dynamique ou l'assemblage d'objets tels que des protéines ou des acides nucléiques purifiés. Ces méthodes incluent, par exemple, la microscopie, l'imagerie ou la thermodynamique. Parmi elle, on compte également la spectroscopie. Cette dernière consiste à mesurer un signal provenant d'une molécule sous l'influence d'un signal fourni par une source extérieure (comme un générateur d'ondes électromagnétiques ou lumineuses). Bien souvent, le spectre provenant d'une molécule est dépendant de sa composition chimique et de son agencement dans l'espace.

Les protéines et les acides nucléiques sont des polymères organiques formés respectivement d'acides aminés et de nucléotides. Ils ont des tailles et des séquences extrêmement variées qui dépendent non seulement de la fonction de la molécule, mais aussi de l'espèce de laquelle elles sont issues. Une protéine d'origine humaine et une protéine d'origine bactérienne peuvent avoir une activité enzymatique identique mais un enchaînement ou un contenu en acides aminés différent. Cette variabilité s'exprime également au sein d'une même espèce. Si l'on se place à l'échelle atomique, il existe autant de structures que de séquences différentes, soit des milliards de possibilités.

Ainsi, dans des conditions de mesure précises (température, concentration, pression, etc.), la signature spectroscopique d'une molécule biologique est le plus souvent unique. Ce caractère unique est d'autant plus prononcé que la méthode spectroscopique utilisée est résolutive.

Un spectre de dichroïsme circulaire (circuler dichroïsm ou CD, en anglais) dans l'UV lointain est la réponse d'une molécule chirale à des longueurs d'onde comprises entre 180 et 260 nm. Les acides aminés et les nucléotides qui composent les protéines et les acides nucléiques ont la capacité de favoriser l'absorbation plus rapide de la composante droite ou gauche de la polarisation d'une onde lumineuse. Ces molécules, dites optiquement actives, génèrent donc un différentiel qui peut être enregistré par un spectrophotomètre. De façon intéressante, ce différentiel est fonction de la composition et de la structure de la molécule. Ainsi, les molécules biologiques, dont les structures 3D sont extrêmement variées, vont générer des spectres CD qui leur seront propres. Pour aller encore plus loin, il est à noter que l'interaction entre plusieurs molécules partenaires aboutit à la formation d'un complexe dont la structure dans l'espace peut parfois différer de la simple addition des structures des partenaires isolés. Ainsi, la signature CD du complexe pourra lui être propre et différera de l'addition des spectres CD de chaque constituant du complexe.

### Solution à la base de l'invention :

Ainsi, les inventeurs ont eu l'idée inattendue de dériver les caractéristiques spectroscopiques spécifiques de molécules biologiques ou organiques telles que par exemple les protéines, les peptides et les acides nucléiques en clé ou facteur d'authentification. Plus précisément, l'analyse par dichroïsme circulaire de molécules biologiques ou organiques, seules ou en mélanges plus ou moins complexes, est capable de fournir un spectre unique qui peut être utilisé comme une clé ou facteur d'authentification spectroscopique unique et robuste. De plus, cette clé pourra s'ajouter à un ou plusieurs autres systèmes d'identification/authentification pour le déverrouillage de données ou pour l'accès à des sites sécurisés dans le cadre d'une procédure dite d'authentification forte.

Ce nouveau système d'authentification présente plusieurs avantages :
- Fiabilité et robustesse de la signature spectrale.
- Reproductibilité de la signature spectrale.
- Nombre très élevé de signatures spectrale possibles.
- Difficulté de modélisation *ab initio* des signatures spectrales.
- Rapidité d'obtention de la signature spectrale.
- Séparation physique des molécules à analyser en mélange.

L'invention consiste à confronter des signatures expérimentales « clé » à des signatures « serrure ». Si les deux types de signature correspondent, l'accès à un « coffre » protégé est autorisé. L'invention reprend le principe de la saisie d'un mot de passe et de sa vérification, mais à l'aide de données expérimentales issues de mesures biophysiques, préférentiellement obtenues par analyses de dichroïsme circulaire d'une ou plusieurs molécules d'origine biologique ou organiques, seules, en mélange ou sous l'influence de facteurs environnementaux (comme par exemple la température, la pression ou les conditions du milieu).

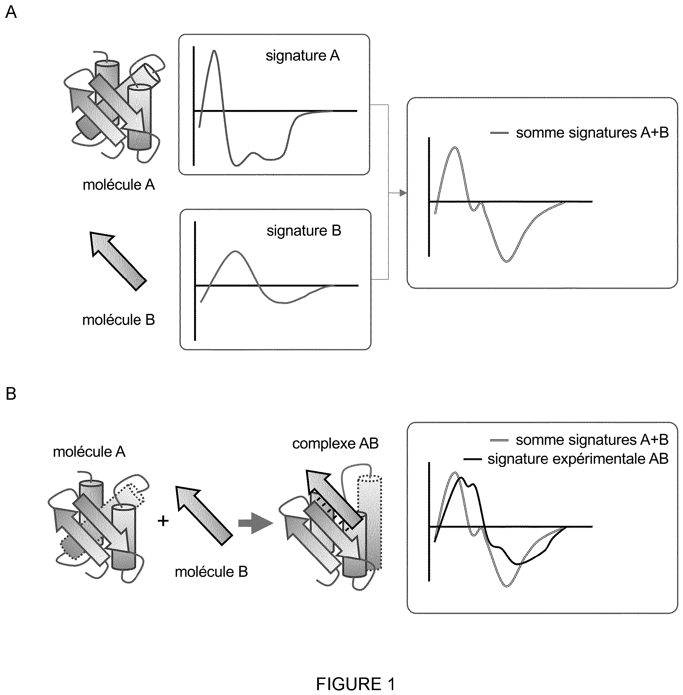

Il est donc possible d'analyser un seul spectre CD comme clé. Il est également possible d'analyser le changement de spectre CD d'une molécule chirale sous l'influence d'une deuxième molécule non optiquement active. Afin d'augmenter le taux de protection, il est également possible d'analyser (par dichroïsme circulaire) deux molécules optiquement actives et capables de générer une nouvelle entité optiquement distincte des molécules initiales. (cf. figure 1).

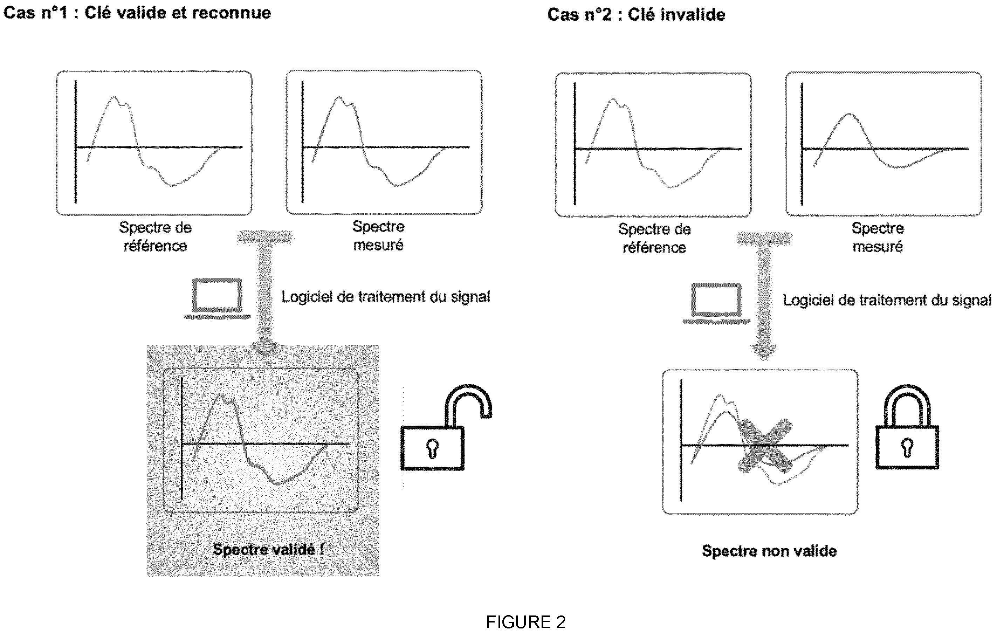

Les spectres ou signatures sont utilisables dans n'importe quel système d'authentification, notamment numérique. Le spectre CD est alors considéré comme un nuage de points dont la dissimilarité ou « *distance »* est calculée par rapport à un spectre de référence ou *« signature »,* afin de valider ou non un accès ou une authentification. (cf. figure 2).

Le calcul de cette distance peut varier en fonction de la criticité de l'élément à protéger. Il peut s'agir d'une moyenne ou médiane globale de la distance point à point entre les spectres associés à un seuil variable par exemple, mais il est également possible de séparer le spectre en plusieurs sous-parties, selon leur niveau de confiance et de précision, et pondérer les moyennes ou médianes locales lors de la décision finale.

Cette seconde méthodologie de calcul permet de s'adapter aux différents équipements physiques qui réaliseront la mesure de ces spectres, en donnant une pondération plus forte aux sous-parties dans lesquelles les équipements sont les plus précis.

Mais le principal avantage est qu'elle rend possible l'utilisation d'une pondération plus forte sur les zones d'interactions entre les molécules lors de leur utilisation combinée, qui marque une réelle différenciation avec les spectres des molécules individuelles.

Ces mécanismes d'authentification sont combinés à des mécanismes d'identification classiques qui permettent de déverrouiller l'accès au spectre qui sert de signature contre laquelle les spectres mesurés sont comparés dans le cadre d'une procédure d'authentification multi-facteurs.

L'utilisation de techniques de cryptographie, comme par exemple des clés publiques et privées (chiffrement asymétrique), pourrait permettre d'assurer la confidentialité des signatures et des spectres mesurés entre les différents éléments composant le système. Débloquer par un tel système l'accès aux spectres signature assurera l'identification des utilisateurs.

La présente invention a donc pour objet un procédé d'authentification d'un utilisateur par spectroscopie de dichroïsme circulaire, ledit procédé comprenant les étapes suivantes :
a) la mesure d'un spectre dichroïque d'au moins une molécule chirale présentée par un utilisateur dont l'identité est à vérifier ;
b) la comparaison dudit spectre mesuré à une base de spectres dichroïques de référence d'utilisateurs déterminés à l'avance ;
c) la validation de l'authentification de l'utilisateur lorsque ledit spectre mesuré est superposable à un spectre de référence de la base de spectres dichroïques de référence d'utilisateurs déterminés, ou le rejet de l'authentification lorsque ledit spectre mesuré n'est superposable à aucun spectre de référence de ladite base.

La présente invention a également pour objet un dispositif d'authentification d'un utilisateur, par mise en oeuvre d'un procédé d'authentification selon la présente invention, ledit dispositif comprenant :
- un dispositif de mesure d'un spectre dichroïque d'au moins une molécule chirale présentée par un utilisateur dont l'identité est à vérifier ;
- une mémoire morte (pour stocker les spectres dichroïques de référence d'une base de spectres dichroïques d'utilisateurs déterminés à l'avance) ;
- une mémoire vive (pour stocker temporairement le spectre dichroïque mesuré pendant la vérification de l'identité de l'utilisateur) ;
- un processeur (pour traiter (authentifier ou rejeter) la mesure après vérification/comparaison ; pour réaliser une authentification en déterminant si le spectre dichroïque mesuré et un spectre dichroïque de référence de la base sont superposables) ; et
- un moyen de transmission d'un code de résultat d'authentification (pour transmettre le résultat de la vérification/authentification au contrôleur d'accès).
- un système classique de visualisation de l'état de l'authentification (pour informer l'utilisateur de la réussite ou de l'échec de l'authentification).

Selon un mode de réalisation particulier de la présente invention, le dispositif de mesure est un spectrophotomètre à dichroïsme circulaire ou un spectropolarimètre de dichroïsme circulaire.

Selon un mode de réalisation particulier de la présente invention, le moyen de transmission est une interface filaire permettant l'activation d'un relais contrôlant une serrure magnétique ou électronique au travers d'une centrale de contrôle d'accès, à savoir un bus sécurisé reliant le dispositif de mesure au contrôleur d'accès. Ainsi une fois le spectre validé, la réponse est envoyée à la centrale de contrôle d'accès, qui une fois tous les facteurs d'authentification validés, va déclencher l'ouverture d'une serrure par exemple ou la génération d'un jeton d'authentification dans un système informatique.

Selon un mode de réalisation particulier de la présente invention, le système classique de visualisation de l'état de l'authentification informant l'utilisateur de la réussite ou de l'échec de l'authentification peut par exemple être un écran à cristaux liquides, un écran LED, ou des diodes électroluminescentes.

La présente invention a également pour objet l'utilisation d'un spectre dichroïque d'au moins une molécule chirale pour authentifier un utilisateur. L'authentification de l'utilisateur consiste à vérifier/valider la concordance dudit spectre dichroïque de ladite au moins une molécule chirale avec un spectre dichroïque de référence d'une base de spectres dichroïques d'utilisateurs déterminés à l'avance, selon la stratégie définie (seuil fixe ou variable, pondérations différentes de sous-parties du spectre...).

Selon un mode de réalisation particulier de la présente invention, ladite au moins une molécule chirale est choisie parmi les protéines, les peptides, et les acides nucléiques.

Selon un mode de réalisation particulier de la présente invention, ladite au moins une molécule chirale est (i) une molécule chirale seule, ou (ii) une molécule chirale en mélange avec au moins une molécule chirale différente et/ou au moins une molécule achirale.

### Brève description des figures

Figure 1 représente (A) deux molécules A & B possédant chacune un spectre CD signature caractéristique ainsi que la somme mathématique de ces spectres, (B) le mélange des deux molécules générant un complexe spécifique possédant une signature CD qui lui est propre, à savoir parfaitement distinct de la somme des deux signatures des molécules A & B.
Figure 2 représente le logiciel d'analyse associé à l'invention (Cas n°1) le logiciel déconvolue le spectre CD mesuré et valide son authenticité par comparaison avec le spectre de référence : la serrure est déverrouillée. (Cas n°2) Le logiciel ne reconnaît pas la signature, la clé est erronée : le système ne se déverrouille pas.

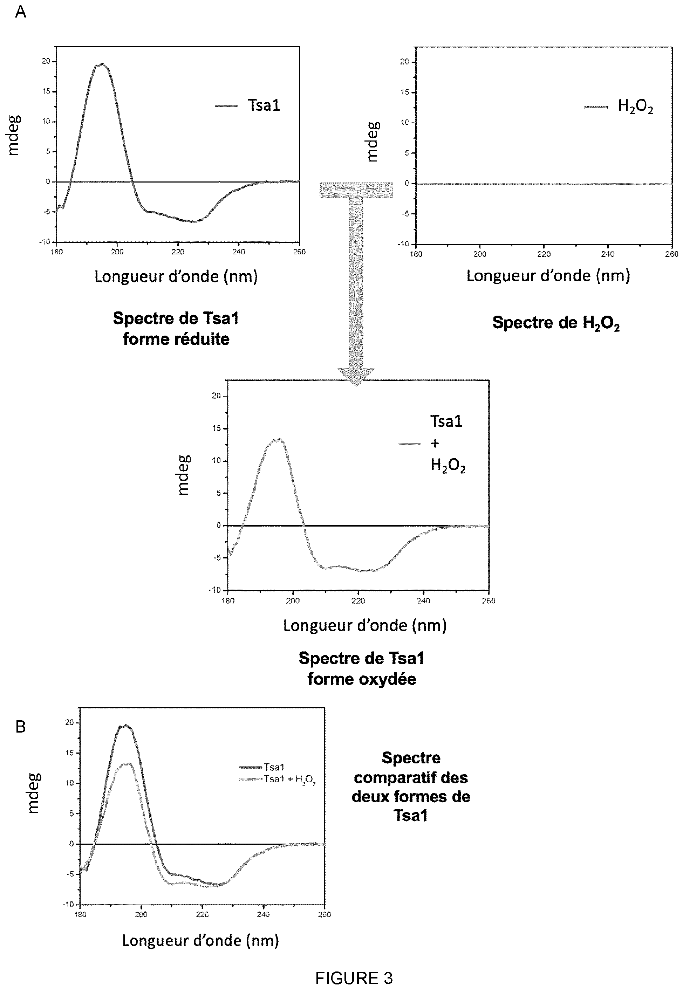

Figure 3 représente (A) le spectre dichroïque de la protéine Tsa1 sous forme réduite à une concentration de de 50 µM (en haut, à gauche), le spectre dichroïque du peroxyde d'hydrogène (H₂O₂) (en haut, à droite), et le spectre dichroïque du complexe généré suite au mélange de la protéine Tsa1 et de H₂O₂ (en bas), (B) la superposition du spectre dichroïque de Tsa1 sous forme réduite au spectre dichroïque du complexe généré après addition de H₂O₂.

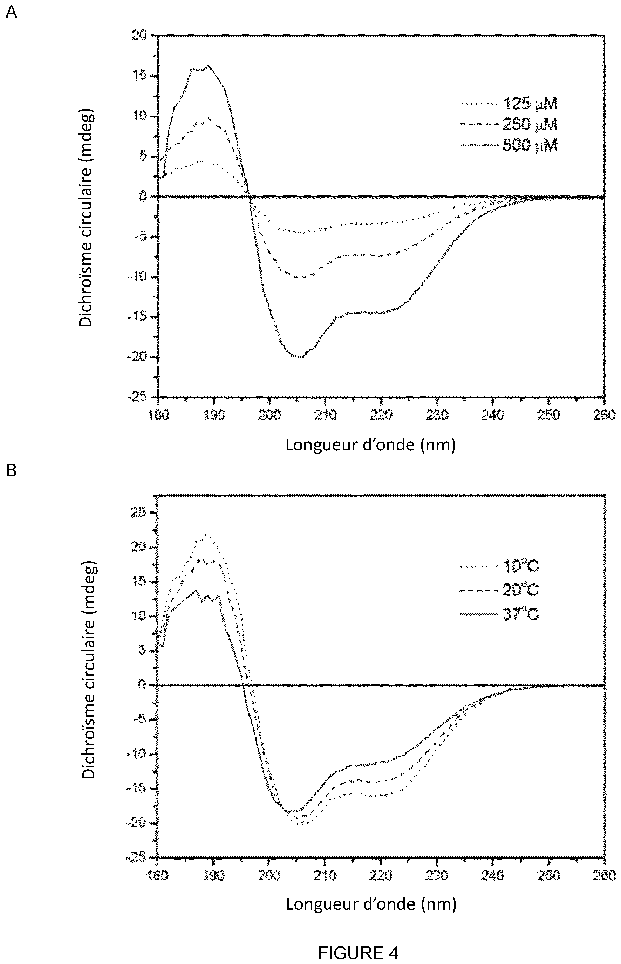

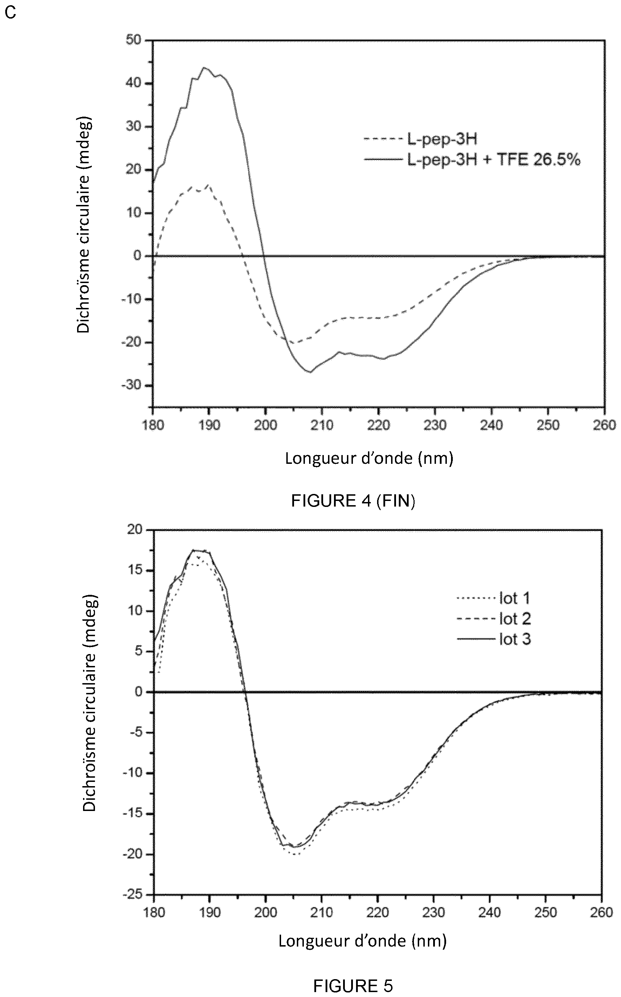

Figure 4 représente (A) les spectres dichroïques du peptide L-pep-3H à différentes concentrations (125 µM, 250 µM et 500 µM), (B) les spectres dichroïques du peptide L-pep-3H à concentration identique, à différentes températures (10°C, 20°C, 37°C), (C) la superposition des spectres dichroïques du peptide L-pep-3H à concentration et température identique, avec et sans ajout de TFE (trifluoroéthanol) à 26,5%.
Figure 5 représente la comparaison des spectres dichroïques de 3 lots du peptide L-pep-3H, à concentration fixe (500 µM) et à une température de 20°C.

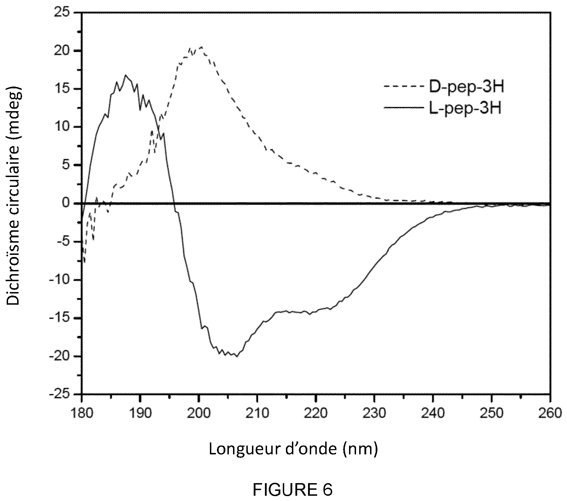

Figure 6 représente la superposition des spectres dichroïques du peptide naturel L-pep-3H et du peptide de synthèse D-pep-3H, à concentration fixe (500 µM) et à une température de 20°C.

### EXEMPLES

### EXEMPLE 1: SIGNATURE DICHROÏQUE DE LA PROTEINE Tsa1 SEULE OU EN MELANGE AVEC UNE AUTRE MOLECULE

La protéine Tsa1 sous forme réduite à une concentration de 50 µM, seule ou en mélange avec du peroxyde d'hydrogène (H₂O₂), a été analysée par dichroïsme circulaire. (Kriznik et al, 2020) [1].

La figure 3B montre un changement conformationnel de la protéine Tsa1 oxydée par H₂O₂ (complexe « Tsa1+H₂O₂ ») par rapport à la protéine Tsa1 sous forme réduite (Tsa1, figure 3A) ; conduisant à une signature dichroïque spécifique du mélange qui n'est pas une simple addition des spectres de Tsa1 et de H₂O₂.

Dans le cadre du renforcement du système d'authentification, cet exemple montre que le mélange d'une molécule A avec une molécule B conduit à un nouveau spectre spécifique, qui n'est pas une addition point à point des spectres des molécules isolées.

Cet exemple montre qu'une molécule A conduit à un nouveau spectre spécifique, non seulement lorsqu'elle est mélangée à une molécule B, mais également lorsque qu'elle est soumise seule à différentes conditions expérimentales : concentration, température, modification du solvant, etc....

### EXEMPLE 2 : SIGNATURE DICHROÏQUE DU PEPTIDE L-pep-3H SOUS DIFFERENTES CONDITIONS EXPERIMENTALES

Le peptide L-pep-3H de séquence SEQ ID NO : 1 : TPEEIARWREERRKNYPTLAN, a été analysé par dichroïsme circulaire sous différentes conditions expérimentales (concentration, température, ajout de trifluoroéthanol (TFE) au tampon de solubilisation du peptide).

La figure 4A montre que le spectre dichroïque du peptide seul se modifie avec l'évolution de la concentration, en suivant une loi de proportionnalité.

La figure 4B montre également que pour une concentration en peptide donnée, des signatures dichroïques uniques peuvent être obtenues en fonction de la température.

La figure 4C montre également que l'ajout de TFE à 26,5% au tampon de solubilisation du peptide permet d'obtenir une nouvelle signature dichroïque du peptide.

La figure 5 montre la reproductibilité des mesures en analysant 3 lots du peptide L-pep-3H préparés indépendamment à partir d'un stock concentré. Dans des conditions expérimentales fixes (température, tampon et concentration en peptide), les 3 lots présentent des signatures dichroïques superposables, démontrant la fiabilité de la mesure.

La figure 6 montre la signature dichroïque d'un peptide de synthèse n'incluant que des acides aminés lévogyres (L-pep-3H) ou devogyres (D-pep-3H).

### EXEMPLE 3 : SIGNATURES DICHROÏQUES DES PEPTIDES L-pep-3H et D-pep-3H

Le peptide de synthèse L-pep-3H de séquence SEQ ID NO : 1 : TPEEIARWREERRKNYPTLAN (21 acides aminés, masse moléculaire : 2629,92 Daltons), n'incluant que des acides aminés lévogyres, a de nouveau été analysé par dichroïsme circulaire.

Dans ces conditions expérimentales identiques (concentration et température fixes), le peptide de synthèse D-pep-3H de séquence SEQ ID NO : 1 mais n'incluant que des acides aminés dextrogyres, a été analysé par dichroïsme circulaire, et son spectre dichroïque a été superposé à celui du peptide L-pep-3H.

La figure 6 montre qu'en utilisant un peptide de synthèse n'incluant que des acides aminés dextrogyres (D-pep-3H), on obtient une signature dichroïque totalement différente de celle obtenue avec un peptide de synthèse n'incluant que des acides aminés lévogyres (L-pep-3H).

Cet exemple montre que deux peptides présentant pourtant la même séquence et la même masse moléculaire peuvent présenter des signatures spectrales qui leur sont propres. Ce résultat ajoute une strate au secret de la clé d'authentification.

L'ensemble des résultats montre qu'il est possible d'obtenir facilement des signatures dichroïques uniques et reproductibles grâce à la multiplicité des paramètres de mesure, pour tous types de molécules chirales.

Par exemple, dans le cas de molécules protéiques ou peptidiques, ces paramètres peuvent être la séquence en acides aminés, la nature des acides aminés (lévogyre ou dextrogyre), la composition du solvant, la concentration de la molécule analysée, et/ou la température. Ainsi, si l'on prend par exemple un peptide de 10 acides aminés, chacune des positions de ce peptide peut être occupée par un des 20 acides aminés dits naturels (lévogyres, donc qui tournent le plan de polarisation vers la gauche) ou par l'un des 20 acides aminés dits non-naturels (dextrogyres, donc qui tournent le plan de polarisation vers la droite). Au final, il existe donc 10⁴⁰ séquences possibles pour ce peptide, avec des signatures spectrales distinctes. Le repliement tridimensionnel de ces peptides dans l'espace modifie de plus leurs propriétés spectrales. Par ailleurs, l'influence des paramètres physiques de mesure comme la température, la pression, le pH, etc... sont autant de grandeurs qui vont avoir une influence sur le spectre dichroïque de la ou des molécules à analyser seules ou en mélange. Actuellement, la synthèse de peptides, protéines ou acides nucléiques, tous optiquement actifs, est commune.

Tous ces éléments font que la multiplicité des spectres de dichroïsme circulaire potentiels est gigantesque ; ce qui favorise leur utilisation comme nouvelle clé d'authentification.

### Liste de références

[1] Kriznik A, Libiad M, Le Cordier H, Boukhenouna S, Toledano MB, Rahuel-Clermont S. Dynamics of a Key Conformational Transition in the Mechanism of Peroxiredoxin Sulfinylation. ACS Catal. 2020 Mar 6;10(5):3326-3339. doi: 10.1021/acscatal.9b04471.

## Revendications

1. Procédé d'authentification d'un utilisateur par spectroscopie de dichroïsme circulaire, ledit procédé comprenant les étapes suivantes :
a) la mesure d'un spectre dichroïque d'au moins une molécule chirale présentée par un utilisateur ;
b) la comparaison dudit spectre mesuré à une base de spectres dichroïques de référence d'utilisateurs déterminés ;
c) la validation de l'authentification de l'utilisateur lorsque ledit spectre mesuré est superposable à un spectre de référence de la base de spectres dichroïques de référence d'utilisateurs déterminés, ou le rejet de l'authentification lorsque ledit spectre mesuré n'est superposable à aucun spectre de référence de ladite base.

2. Procédé d'authentification selon la revendication 1, où ladite au moins une molécule chirale est (i) une molécule chirale seule, ou (ii) une molécule chirale en mélange avec au moins une molécule chirale différente et/ou au moins une molécule achirale.

3. Dispositif de mise en oeuvre d'un procédé d'authentification selon la revendication 1 ou 2, ledit dispositif comprenant :
- un dispositif de mesure d'un spectre dichroïque d'au moins une molécule chirale présentée par un utilisateur ;
- une mémoire morte de stockage d'une base de spectres dichroïques de référence d'utilisateurs déterminés ;
- une mémoire vive de stockage temporaire du spectre dichroïque de ladite au moins une molécule chirale mesuré, pendant la vérification ;
- un processeur de traitement et d'authentification du spectre dichroïque de ladite au moins une molécule chirale mesuré au regard de la base de spectres dichroïques de référence d'utilisateurs déterminés ; et
- un moyen de transmission d'un code de résultat d'authentification ;
- un système de visualisation de l'état de l'authentification.

4. Dispositif d'authentification selon la revendication 3, où le dispositif de mesure est un spectrophotomètre à dichroïsme circulaire ou un spectropolarimètre de dichroïsme circulaire.

5. Dispositif d'authentification selon la revendication 3 ou 4, où le moyen de transmission est un bus sécurisé reliant le dispositif de mesure au contrôleur d'accès.

6. Dispositif d'authentification selon l'une quelconque des revendications 3 à 5, où le système de visualisation est un écran à cristaux liquides, un écran LED, ou des diodes électroluminescentes.

7. Utilisation d'un spectre dichroïque d'au moins une molécule chirale pour authentifier un utilisateur.

8. Utilisation selon la revendication 7, où l'authentification de l'utilisateur consiste à vérifier la concordance dudit spectre dichroïque de ladite au moins une molécule chirale avec un spectre dichroïque de référence d'une base de spectres dichroïques d'utilisateurs déterminés.

9. Utilisation selon la revendication 8, où ladite au moins une molécule chirale est choisie parmi les protéines, les peptides, et les acides nucléiques.

10. Utilisation selon l'une quelconque des revendications 7 à 9, où ladite au moins une molécule chirale est (i) une molécule chirale seule, ou (ii) une molécule chirale en mélange avec au moins une molécule chirale différente et/ou au moins une molécule achirale.
